# EUROPEAN PATENT SPECIFICATION

(11) **EP 2 848 723 B1**
(45) Date of publication and mention of the grant of the patent: **24.02.2021**
(21) Application number: 13184843.4
(22) Date of filing: 17.09.2013
(51) Int. Cl.: D06F 37/22

(54) **Washing laundry machine with damper elements**
Waschmaschine mit Dämpferelementen
Machine à laver le linge avec des éléments d'amortissement

(43) Date of publication of application: 18.03.2015
(73) Proprietor: Electrolux Appliances Aktiebolag, 105 45 Stockholm (SE)
(72) Inventor: Rigo, Flavio, 33080 Porcia (PN) (IT)
(74) Representative: Electrolux Group Patents

(56) References cited:
- EP-A1- 1 703 010
- EP-A2- 1 760 183
- JP-A- 2001 170 389
- US-A- 4 472 075
- US-A- 5 114 260
- US-A1- 2004 244 436
- US-A1- 2007 044 519

## Description

### Field of the invention

The present invention relates to a laundry washing machine comprising a treatment chamber adapted for housing a drum inside which a load to be washed can be placed and at least one damper element supporting the treatment chamber on a supporting structure.

### Background of the invention

Conventionally, laundry washing machines include a laundry treatment chamber, inside which a rotating drum, is located. The treatment chamber is associated to a supporting structure, typically defined by a frame and/or a casing, adapted to rest on the floor e.g. through feet.

In order to dampen the vibrations generated by the load during rotation of the drum and avoid or at least limit their propagation to the casing, damper elements, called also dampers or shock absorbers, are interposed between the supporting structure and the treatment chamber. Document US 2004/0244436 discloses a drum type washing machine including a water tub installed in a body and a damper fixed to the water tub at one of its extremity, and to the machine base at the other extremity, through a connecting portion receiving the damper extremity, associated with said extremity in a rotatable manner through a pin passing the holes provided in the damper extremity and in the connecting portion.

In document US 2007/0044519 the connecting portions are provided on damper supporters associated with the base of the washing machine.

For example, EP 1760183 discloses a drum type washing machine including a water tub installed in a body and four dampers to support the water tub. Damper fixing units are provided on a bottom plate of the body to secure the dampers. The fixing unit is formed by a pair of L-shaped fixing pieces, perforated with holes, for fixing an end of the damper by means of a fixing bolt.

The bolt is formed by a screw and a nut, and the damper is mounted on the bottom plate by first positioning it between the fixing pieces, with a seat of the end of the damper aligned to the holes of the fixing pieces. Then, the screw of the bolt is inserted in the aligned holes and seat, and finally the structure is secured by tightening the nut on the threaded end of the screw.

This operation could be cumbersome, since it requires that the screw is inserted precisely aligned with the holes and the seat in order to pass through them without excessive efforts. Furthermore, in order to tighten the nut on the screw, both ends of the bolt should be reached, typically by a tool, and this could be somehow complicated.

A screw-and-nut fixed damper is also disclosed in EP 1892326 which is accordingly subjected to the same drawbacks.

In JP 2001-0170389 a damper extremity is fixed to the respective fixing unit through a pin or a screw inserted on one side of said extremity, and the fixing unit is provided on the side opposite to the pin / screw insertion.

Said solution is subject to drawbacks concerning the risk of the pin /screw detachment due to the machine / tub vibrations.

Alternative technical solutions used in different technical fields are disclosed by documents US 4472075 and US 5114260; the document US 4472075 discloses a screw member inserted on holes provided on two rods extremities, in order to connect them in a rotatable manner, and to prevent the extremities deformation due to the torque forces imparted under the rotation of said rods; the document US 5114260 discloses a shackles composed of a U-shaped clevis and of a pin which extends through aligned openings in eyes which define an open end of the clevis.

An alternative system for fixing a damper to the supporting structure of a washing machine is described in EP 1980661, disclosing a washing machine comprising a shock absorber connected to the body of the machine and the tub inside the body. A sleeve-and-pin connection is used in order to connect the shock absorber with the body and the tub. Both sleeve and pin are formed as hollow bodies and a recess is formed from one end to the other end thereof in order to allow at least limited variations of the diameter of both the pin and the sleeve. A similar solution is also disclosed in EP 2348149 or in WO 2005/085510.

Also this solution is subjected to some drawbacks since hollow pins, having a recess through their whole length are easily subjected to failures and they require a precise manufacturing in order to provide them, as well as the sleeves, with proper deformability.

A third connection system is disclosed in US 7373793, relating to a damper assembly and a washing machine using the same, in which the damper assembly includes a base having a first connecting portion, a damper having a second connecting portion at one end and attenuating a vibration transferred to the base, and a damper pin penetrating the first and second connecting portions to secure them. The damper pin has a slip-fit connection with the first and second connecting portions including a detent, which is elastically transformed when the damper pin penetrates through the connecting portions. The detent restores to be locked on a lateral side of the connecting portions after thoroughly penetrating (or passing through) the connecting portions.

Document EP 1703010 discloses a fourth way to fix the pin to the connecting portion; said pin is provided of a through-hole so that, when the pin is inserted on the holes of the damper extremity and of the connecting portion, the extremities of the pin are deformed by a tool, axially constraining it on said holes.

Said solution has the drawback that the pin has a low stiffness and that a complicated and expensive production step is required to connect the damper to the machine.

Also this solution requires a relatively complex manufacturing and cannot guarantee sufficient reliability.

### Summary of the invention

An object of the invention is to provide a laundry washing machine that overcomes the drawbacks of known laundry appliances provided with damper elements for dampening vibrations generated by the load during washing cycles.

A further object is to provide a laundry washing machine in which the damper elements can be easily assembled.

Furthermore, it is also an object of the present invention to provide a laundry washing machine in which the damper elements are fixed with pins that can be easily manufactured and, at the same time, are not particularly subjected to failures.

According to the invention it is provided a laundry washing machine comprising:
- a treatment chamber comprising a drum for receiving a load to be washed;
- a supporting structure of the treatment chamber;
- at least one damper element connecting the treatment chamber to the supporting structure;
- a damper fixing assembly for rotatably fixing the at least one damper element on the supporting structure, the damper fixing assembly comprising a pair of shoulders and a pin;
wherein the at least one damper element comprises a first connecting end which is/can be rotatably engaged with the pin and which is/can be positioned between the shoulders, and wherein the shoulders comprise respective threaded holes in which respective threaded portions of the pin are/can be engaged.

It is to be understood that in the present application the expressions "is/can be" and "are/can be", referred to "engaged" and "positioned", mean that the component to which the expression is referred can be actually "engaged" or "positioned" in a certain way, or it can be simply arranged/made in such a way that it can be "engaged" or "positioned" in such a certain way, being it actually engaged/positioned or not.

It is to be understood that the in the laundry washing machine according to the invention, the pin of the damper fixing assembly can be easily aligned in the respective holes by using a threaded coupling.

Also, during assembly of the damper fixing assembly it is required to reach only one end of the pin, thus making this operation very simple.

Moreover, the damper fixing assembly of the washing machine according to the invention can be manufactured in an easy and inexpensive way, since the manufacturing of both the pin and the shoulders only requires the provision of respective threaded portions.

According to a preferred embodiment, in the washing machine according to present invention, the diameter of the threaded hole of one shoulder and of a respective first threaded portion of the pin is larger than the diameter of the threaded hole of the other shoulder and of a respective second threaded portion of the pin. This advantageously makes it possible to fix the pin in the respective holes of the shoulders by first inserting the smaller threaded portion in the hole with the larger thread and then further inserting the pin and engaging the corresponding threads of the shoulder and of the pin.

Preferably, the pin comprises a tapered tip axially extending from one of said threaded portions, thus making the engagement of the pin in the first connecting end and its insertion in the holes smoother.

According to a preferred embodiment, the pin comprises a smooth cylindrical portion between said respective threaded portions. Preferably, a seat is defined in the first connecting end, the seat being rotatably coupled with the smooth cylindrical portion.

These features advantageously allow a smooth and precise connection between the pin and the damper element.

Preferably, the shoulders are formed by arms of an U-shaped bracket connected or connectable to the supporting structure. In this manner it is advantageously possible to provide precisely aligned shoulders as well as a very solid structure to the damper fixing assembly.

According to a further aspect of the invention, the damper fixing assembly comprises a blocking device for preventing rotation of the pin in an unscrewing direction, thus avoiding squeaks or other noises due to backlashes generated by partial unscrewing of the pin.

According to a preferred embodiment, the blocking device comprises a first and a second projection respectively on the pin and on one shoulder of said pair of shoulders and the first and second projection engage each other when the pin is fully screwed on the bracket. In this manner, the blocking device prevents rotation of the pin only when it is fully screwed, therefore advantageously allowing a free rotation thereof during the assembly of the damper fixing assembly.

Preferably, the first and/or the second projection comprise a slanted surface facing a respective surface of the other projection and defining a leading edge and a trailing edge of the projection. The leading edge is more distant from the other projection than the trailing edge. In this manner, since the projections approach each other when the pin is screwed on the shoulders, the slanted surface and the respective surface of the other projection engage only when the pin is unscrewed.

According to a preferred embodiment, the pin comprises an operating head in which an abutment surface is defined, the abutment surface abutting on one shoulder of said pair of shoulders when the pin is fully screwed on the bracket. The first projection projects in a radial direction from the operating key, and the trailing edge projects from the abutment surface towards the shoulder.

This advantageously allows a very simple and inexpensive manufacturing of the blocking device.

Preferably, the shoulder comprises a collar onto which the abutment surface abuts, the second projection projecting in radial direction from said collar, thus further improving the sturdiness of the blocking device.

According to a further preferred embodiment, the first and/or second projection are at least partially elastically deformable and during rotation of the pin the slanted surface of one projection engages the other projection such that the projections are forced apart upon the engagement of the slanted surface with the other projection.

In this manner it is advantageously defined a snap connection between the projections, thus providing the operator with a feedback of a correct and full engagement of the pin in the holes.

Preferably, the threaded holes and the respective threaded portions of the pin have single-start thread forms.

This advantageously allows controlling the angular position of the pin when it is fully screwed, since the start angular position of the pin is univocally defined by such thread form.

### Brief description of the drawings

These and other features and advantages of the invention will be better apparent from the following description of some exemplary and non-limitative embodiments, to be read with reference to the attached drawings, wherein:
- Fig. 1 is a perspective view of a laundry washing machine according to the present invention;
- Figs. 2 and 2A are a front perspective view of the laundry washing machine of the present invention and a respective detail thereof in which a casing has been depicted in transparency in order to show internal components of the laundry washing machine;
- Figs. 3 and 3A are a rear perspective view of the laundry washing machine of Fig. 2 and a respective detail thereof;
- Fig. 4 is an exploded rear perspective view of a damper element and of a damper fixing assembly of the laundry washing machine according to the present invention;
- Fig. 5 is a perspective view of the damper element, of the damper fixing assembly and of a flat plate of a supporting structure of the laundry washing machine according to the present invention;
- Figs. 6 and 6A are an exploded front perspective view of the damper element, of the damper fixing assembly and of the flat plate of Fig. 5, and a respective detail thereof;
- Figs. 7 and 7A are a side view of the laundry washing machine of the present invention and a respective detail thereof, in which the casing has been removed in order to show internal components; and
- Figs 8A and 8B are perspective views of a pin and of a shoulder of the damper fixing assembly in a partially screwed and in a fully screwed position, respectively.

### Detailed description of the invention

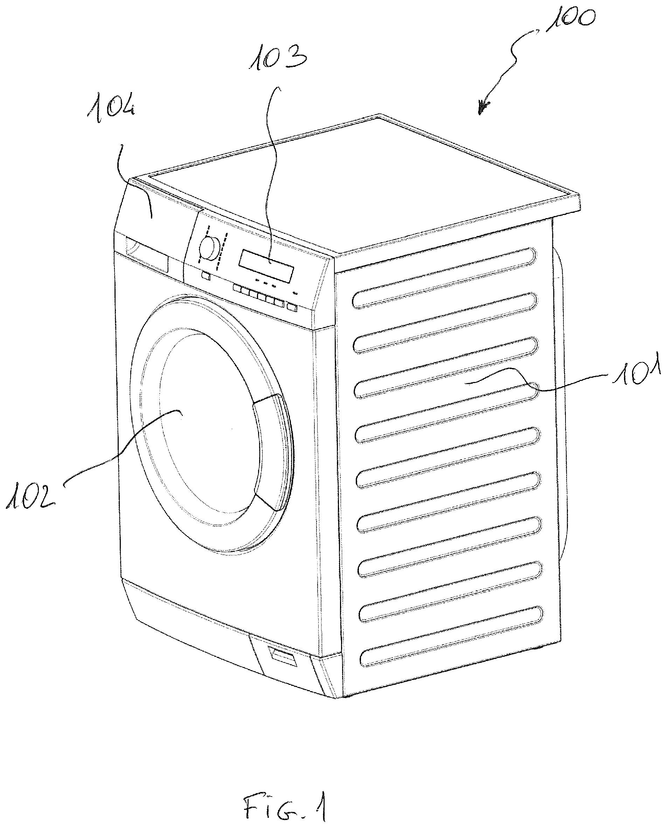

With reference initially to Fig. 1, a laundry washing machine according to the present invention is globally indicated with the reference number 100.

It should be noted that in the context of the present invention with the expression "washing machine" is referred both to a "standard" washing machine, adapted only for washing and rinsing the laundry, and to a washer-drier, which is adapted for washing, rinsing, and also for drying the laundry.

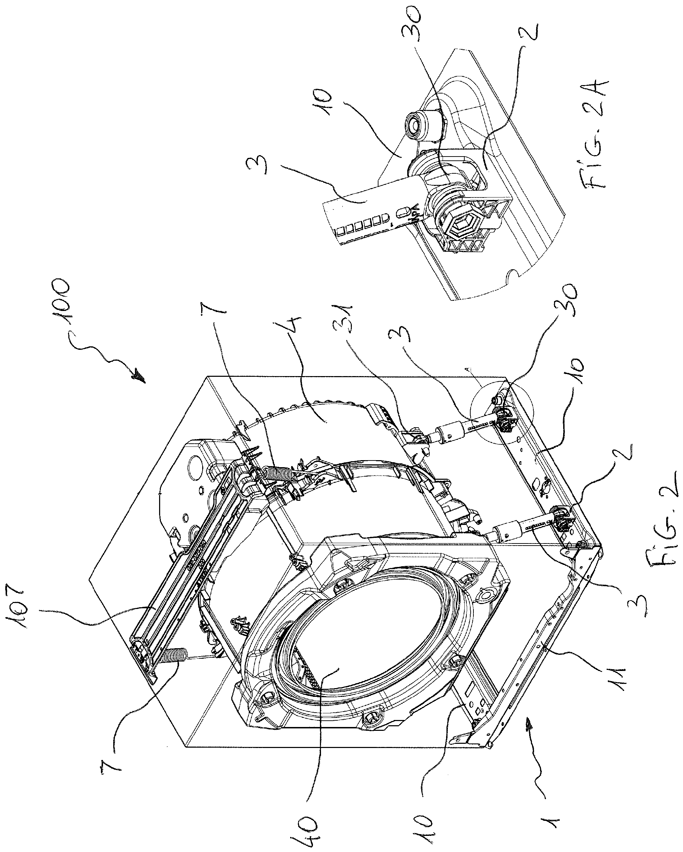

The laundry washing machine 100 comprises an outer casing 101, preferably but not necessarily parallelepiped-shaped, and a treatment chamber 4 housing a drum 40, both shown in Fig. 2, for receiving the laundry and in general the clothes and garments to be washed and/or dried. Preferably, the drum 40 has the shape of a hollow cylinder and it is rotatably fixed to the casing, so that it can rotate around an axis thereof. According to the present embodiment, the rotation axis of the drum 40 is substantially horizontal but it should be appreciated that, as an alternative, the drum can be positioned in the casing 101 in such a position that its rotation axis is vertical or tilted.

Always with reference to Fig. 1, an aperture is defined in the casing, facing the treatment chamber and thus allowing accessing to the drum for loading and unloading the laundry in the machine. The washing laundry machine 100 further comprises a door assembly 102, preferably pivotally supported on the casing 101 and displaceable between a closed position, shown in Fig. 1 and in which the aperture is closed or preferably sealed and an open position in which access to the drum is allowed.

According to the present embodiment, the aperture is defined in a front face of the casing 101, in which are also located a control panel 103 of the machine 100 and a drawer 104 suitable for containing detergents and other additives in washing machines or for collecting water in dryers.

In other words, the device 100 according to present embodiment is a front-load device. Nevertheless it will be appreciated that the present invention could also apply to different types of washing laundry machines, such as top-loading ones.

With reference now to Fig. 2, the washing machine 100 according to the present invention further comprises a supporting structure 1 of the treatment chamber 4.

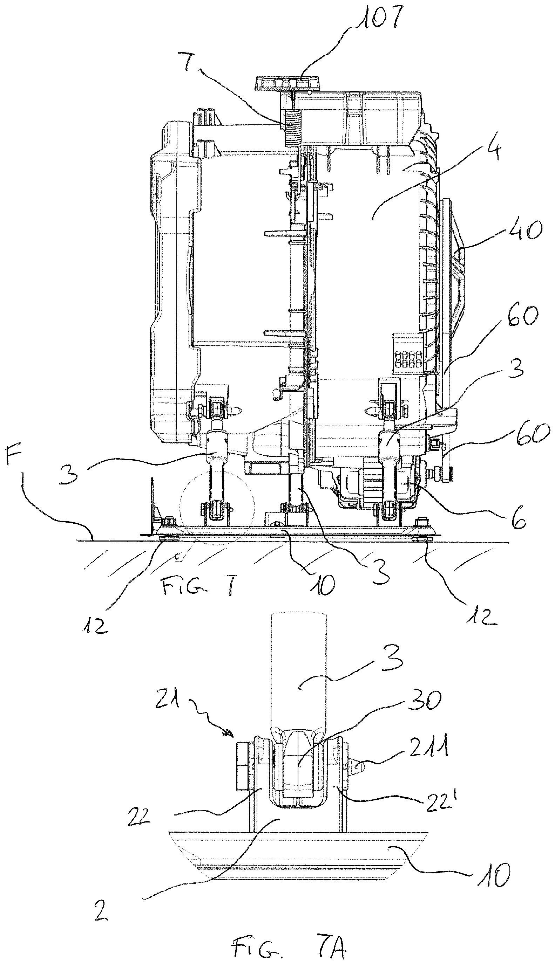

According to a preferred embodiment, the supporting structure 1 comprises feet 12, preferably adjustable and shown in Fig. 7, onto which the washing machine 100 rests on the floor F.

Preferably, the supporting structure 1 comprises a pair of flat shaped plates 10, onto which the feet are fixed. According to the present embodiment, plates 10 are parallel each other and also parallel to the axis of rotation of the drum. In order to increase the sturdiness of the supporting structure 1, the plates 10 are advantageously connected by means of at least one transverse beam 11.

Preferably, the casing is fixed, e.g. by means of screws, clincing or other similar connections, to the plates 10 and/or to the beam 11.

According to a preferred embodiment, the washing machine 100 comprises damper elements 3, connecting the treatment chamber 4 to the plates 10 or, more in general, to the supporting structure 1. In the present advantageous embodiment, the washing machine 100 comprises three damper elements 3, two fixed to one plate 10 and one fixed to the other plate 10. Accordingly, the treatment chamber 4 is advantageously supported in correspondence of three different points, thus suitably dampening both lateral and vertical vibrations and oscillations.

Preferably, the damper elements 3 are tilted with respect to a vertical axis, in order to improve the stability of the treatment chamber 4.

According to the present embodiment, the damper elements 3 comprise a cylinder inside which a stem can slide. A damper media is housed in the cylinder, dampening the movement of the stem. Opposed connecting ends 30, 31 of the stem and of the cylinder, respectively, are provided with a seat allowing the connection of the damper element. Preferably, the seat is defined by a through hole, optionally provided with a bushing.

With reference also to Fig. 2A, the washing machine 100 further comprises damper fixing assemblies 2 for fixing, preferably in a rotatable manner, the damper element 3 on the supporting structure 1. In the present embodiment, each damper element 3 is fixed by means of a respective fixing assembly, but it will be appreciated that the present invention could also apply for fixing a single damper element of a washing machine.

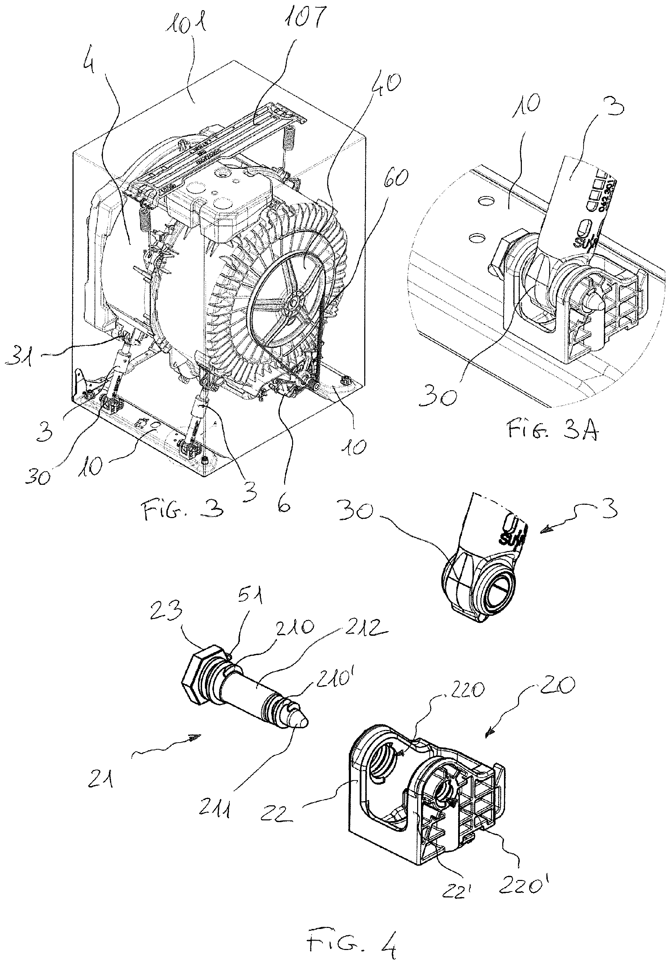

As shown in Fig. 3, washing machine 100 further comprises a motor assembly 6 for rotating the drum 40. Preferably, the motor assembly is mounted at the bottom of the laundry treating chamber 4 and transmits a rotation movement to the drum 4 by means of a belt 60.

Also according to a preferred embodiment, the washing machine 100 further comprises an upper beam 107, associated to the casing 101, for supporting of the treating chamber 4 by means of resilient elements, e.g. two springs.

With reference now to Fig. 4, the damper fixing assembly 2 comprises a pair of shoulders 22, 22', preferably formed by arms of an U-shaped bracket 20 connected or connectable to the plates 10. Preferably, the bracket 20 is fixed to the plate 10 both by a shape coupling defined by a connection element, not shown in the Figures, which is/can be engaged on a respective seat in the plates, and by screws, fixing the bracket 20 after it has been positioned.

The damper fixing assembly 2 further comprises a pin 21 which is/can be engaged in the bracket as will be described in greater detail in the following.

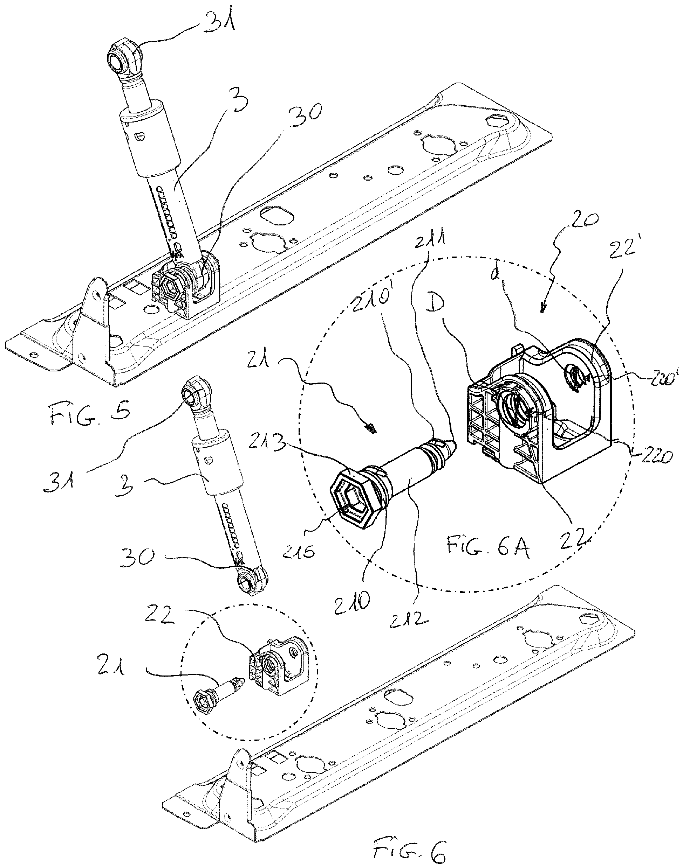

As shown in Figs. 4 and 6A, the shoulders 22, 22' are each provided with a respective threaded hole 220, 220'. The axes of the threaded holes 220, 220' are aligned and respective threaded portions 210, 210' of the pin 21 are/can be engaged therein.

Preferably, the threaded portions 210, 210' are separated therebetween by a smooth cylindrical portion 212. The distance between the threaded portions is substantially the same of the distance between the shoulders 22 and 22'.

In this manner, when the pin 21 is inserted in both threaded holes 220 and 220', each threaded portions 210 and 210' is engaged in a respective hole.

The smooth cylindrical portion 212 is/can be associated to the connecting end 30 of the damper element 3. In the present embodiment, the smooth cylindrical portion 212 is/can be coupled to the circular seat defined in the connection end 30, with the bushing interposed therebetween.

It should be noted that in the context of the present invention, with the term smooth will be intended that the portion 212 is not provided with any thread and its surface has a sufficiently low friction coefficient such that it does not to prevent or excessively impede the rotation of the damper element 3 on the pin 21.

It should be understood that in order to engage each other, the female thread of threaded holes 220 and 220' should have the same diameter and the same pitch of the male thread of the respective threaded portion 210, 210' of the pin 21. Since different diameters of a thread can be considered, in the context of the present invention the term diameter of the thread will be used with the meaning of nominal diameter.

According to a preferred embodiment, the diameter D of the threaded hole 220 of one shoulder 22 and of a respective first threaded portion 210 of the pin 21 is larger than the diameter d of the threaded hole 220' of the other shoulder 22' and of a respective second threaded portion 210' of the pin 21.

Preferably, the diameter of the smooth portion is larger than the diameter d of the small threaded portion 210' and smaller than the diameter D of the large threaded portion 210. This allows an easy assembly of the connecting end 30 on the pin, as well as an easy engagement of the pin 21 on the bracket 20.

Always according to a preferred embodiment, the pin 21 further comprises a tapered tip 211 axially extending from the small threaded portion 210'.

Preferably, the pin 21 comprises an operating head 213, e.g. a hexagonal head, which can be therefore operated with a suitable tool.

Therefore, according to the present embodiment, the pin 21 comprises in sequence the operating head 213, the first threaded portion 210, the smooth cylindrical portion 212, the second threaded portion 210' and the tapered tip 211.

Accordingly, the damper element 3 is/can be fixed to the supporting structure 1 by positioning the connecting end 30 between the shoulders 22 and 22', then inserting the pin 21 in the holes 220 and 220' and finally screwing the pin 21.

According to a preferred embodiment, the damper fixing assembly 2 further comprises a blocking device 51, 52 for preventing rotation of the pin 21 in an unscrewing direction.

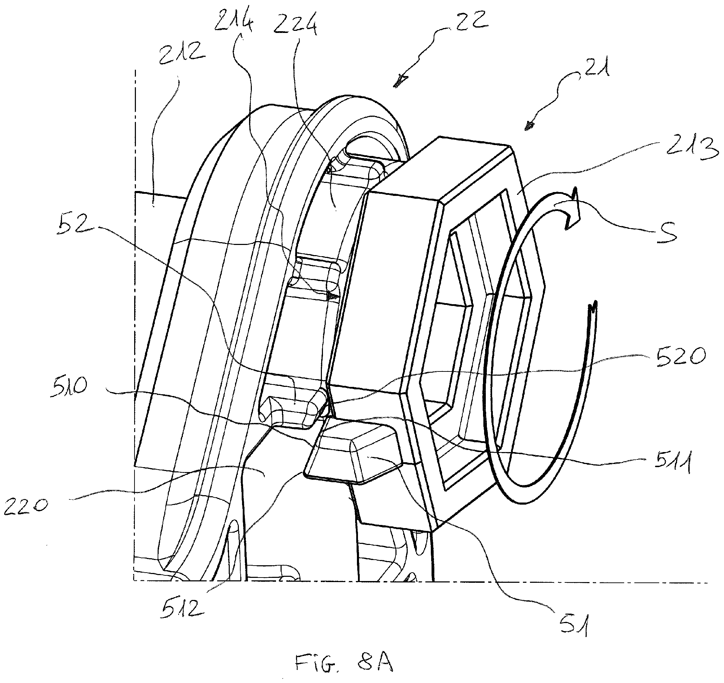

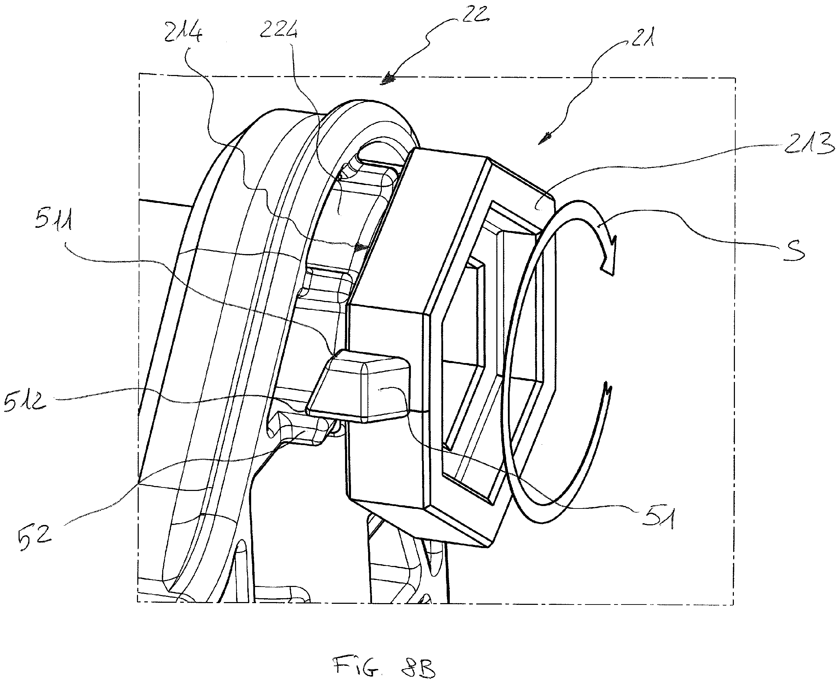

With reference in particular to Figs. 8A and 8B, the blocking device comprises a first and a second projection 51, 52 respectively on the pin 21 and on the first shoulder 22. Preferably, the first and second projection 51, 52 engage each other when the pin 21 is fully screwed on the bracket 22.

In order to engage each other, the first projection 51 advantageously comprises a slanted surface 510 facing a respective surface 520 of the other projection 52. The slanted surface 510 defines a leading edge 511 and a trailing edge 512 of the projection. It should be anyhow appreciated that both projections 51, 52 can comprise a respective slanted surface 510, 520.

The leading edge 511 and the trailing edge 512 are defined such that, when the pin 21 is screwed on the holes 220, 220', the leading edge 511 is more distant from the other projection than the trailing edge 512. When the pin is screwed, the first and second projections 51, 52 come closer each other, and the slanted surface engages with the respective surface of the other projection.

According to a preferred embodiment, the first and/or second projection 51, 52 are at least partially elastically deformable. In this manner, when the slanted surface 510 engages with the respective surface 520 of the other projection 52 during rotation of said pin 51, the projections 51, 52 are forced apart and the deformability of the projections allows to further screw the pin 21 on the bracket, with the first projection 51 passing over the second projection 52, as shown in Fig, 8B.

Preferably, the slanted surface engages with the respective surface of the other projection only when the pin is almost fully screwed on the bracket. It should be noted that according to the present embodiment, an abutment surface 214 is defined. When the pin 21 is screwed on the bracket 20, the abutment surface 214 approaches the first shoulder 22, until it abuts the shoulder 22 in a fully screwed position. Within the context of the present invention, the almost fully screwed position is reached by the pin 21 when only a portion of rotation, i.e. less than 360 degrees, is required for the abutment surface 214 to abut against the shoulder.

According to a preferred embodiment, the first projection 51 projects in a radial direction from the operating key 213, and the trailing edge 512 projects from the abutment surface 214 towards the shoulder 220. The shoulder 22 further comprises a collar 224 onto which the abutment surface 214 abuts when the pin 21 is fully screwed, and the second projection 52 projects in a radial direction from the collar 224.

Preferably, the threaded holes 220, 220' and the respective threaded portions 210, 210' have single-start thread forms, so that the pin 21 can be screwed on the bracket 20 only starting from a predetermined angular position. In this manner the position of the projections 51, 52 is univocally determined during rotation of the pin 21.

It has thus been shown that the present invention allows all the set objects to be achieved. In particular, the provision of threaded holes in which respective threaded portions of the pin allows a simple and precise assembly of the damper elements.

## Claims

1. A washing machine (100) comprising:
• a treatment chamber (4) comprising a drum (40) for receiving a load to be washed;
• a supporting structure (1) of said treatment chamber (4);
• at least one damper element (3) connecting said treatment chamber (4) to said supporting structure (1);
• a damper fixing assembly (2) for rotatably fixing said at least one damper element (3) on said supporting structure (1), said damper fixing assembly (2) comprising a pair of shoulders (22, 22') and a pin (21);
wherein said at least one damper element (3) comprises a first connecting end (30) which is/can be rotatably engaged with said pin (21) and which is/can be positioned between said shoulders (22, 22'),
**characterized in that**
said shoulders (22, 22') comprise respective threaded holes (220, 220') in which respective threaded portions (210, 210') of said pin (21) are/can be engaged.

2. The washing machine (100) according to claim 1, wherein the diameter (D) of the threaded hole (220) of one shoulder (22) and of a respective first threaded portion (210) of said pin (21) is larger than the diameter (d) of the threaded hole (220') of the other shoulder (22') and of a respective second threaded portion (210') of said pin (21).

3. The washing machine (100) according to claim 1 or 2, wherein said pin (21) comprises a tapered tip (211) axially extending from one of said threaded portions (210, 210').

4. The washing machine (100) according to any of the preceding claims, wherein said pin (21) comprises a smooth cylindrical portion (212) between said respective threaded portions (210, 210').

5. The washing machine (100) according to claim 4, wherein a seat (31) is defined in said first connecting end (30), said seat (31) being rotatably coupled with said smooth cylindrical portion (212).

6. The washing machine (100) according to any of the preceding claims, wherein said shoulders (22, 22') are formed by arms of an U-shaped bracket (20) connected or connectable to said supporting structure (1).

7. The washing machine (100) according to any of the preceding claims, wherein said damper fixing assembly (2) comprises a blocking device (51, 52) for preventing rotation of said pin (21) in an unscrewing direction.

8. The washing machine (100) according to claim 7, wherein said blocking device comprises a first and a second projection (51, 52) respectively on said pin (21) and on one shoulder (22) of said pair of shoulders (22, 22'), said first and second projection (51, \52) engaging each other when said pin (21) is fully screwed on said bracket (22).

9. The washing machine (100) according to claim 8, wherein said first and/or said second projection (51, 52) comprise a slanted surface (510, 520) facing a respective surface of the other projection and defining a leading edge (511) and a trailing edge (512) of the projection, said leading edge (511) being more distant from the other projection than said trailing edge (512).

10. The washing machine (100) according to claim 8 or 9, wherein said pin (21) comprises an operating head (213) in which an abutment surface (214) is defined, said abutment surface (214) abutting on one shoulder (22) of said pair of shoulders when said pin (21) is fully screwed on said bracket (20), said first projection (51) projecting in a radial direction from said operating head (213), said trailing edge (512) projecting from said abutment surface (214) towards said shoulder (22).

11. The washing machine (100) according to claim 10, wherein said shoulder (22) comprises a collar (224) onto which said abutment surface (214) abuts, said second projection (52) projecting in radial direction from said collar (224).

12. The washing machine (100) according to any of claims 8 to 11, wherein said first and/or second projection (51, 52) are at least partially elastically deformable and wherein the slanted surface (510, 520) of one projection (51) engages the other projection (52) during rotation of said pin (21) such that said projections (51, 52) are forced apart upon the engagement of said slanted surface (510, 520) with the other projection (52).

13. The washing machine (100) according to any of the preceding claims, wherein said threaded holes (220, 220') and said respective threaded portions (210, 210') have single-start thread forms.

## Patentansprüche

1. Waschmaschine (100), Folgendes umfassend:
• eine Behandlungskammer (4), die eine Trommel (40) zur Aufnahme zu waschender Wäsche umfasst;
• eine Trägerstruktur (1) der Behandlungskammer (4);
• mindestens ein Dämpferelement (3), das die Behandlungskammer (4) mit der Trägerstruktur (1) verbindet;
• eine Dämpferfixierungsanordnung (2) zum drehbaren Fixieren des mindestens einen Dämpferelements (3) an der Trägerstruktur (1), wobei die Dämpferfixierungsanordnung (2) ein Paar Schultern (22, 22') und einen Stift (21) umfasst;
wobei das mindestens eine Dämpferelement (3) ein erstes Verbindungsende (30) umfasst, das drehbar in den Stift (21) eingreift/eingreifen kann, und das zwischen den Schultern (22, 22') angeordnet ist/werden kann,
**dadurch gekennzeichnet, dass**
die Schultern (22, 22') jeweils Gewindebohrungen (220, 220') umfassen, in die jeweilige Gewindeabschnitte (210, 210') des Stifts (21) eingreifen (können).

2. Waschmaschine (100) nach Anspruch 1, wobei der Durchmesser (D) der Gewindebohrung (220) einer Schulter (22) und eines entsprechenden ersten Gewindeabschnitts (210) des Stifts (21) größer als der Durchmesser (d) der Gewindebohrung (220') der anderen Schulter (22') und eines entsprechenden zweiten Gewindeabschnitts (210') des Stifts (21) ist.

3. Waschmaschine (100) nach Anspruch 1 oder 2, wobei der Stift (21) eine verjüngte Spitze (211) umfasst, die sich von einem der Gewindeabschnitte (210, 210') axial erstreckt.

4. Waschmaschine (100) nach einem der vorstehenden Ansprüche, wobei der Stift (21) einen glatten Zylinderabschnitt (212) zwischen den entsprechenden Gewindeabschnitten (210, 210') umfasst.

5. Waschmaschine (100) nach Anspruch 4, wobei ein Sitz (31) im ersten Verbindungsende (30) definiert ist, wobei der Sitz (31) mit dem glatten Zylinderabschnitt (212) drehbar gekoppelt ist.

6. Waschmaschine (100) nach einem der vorstehenden Ansprüche, wobei die Schultern (22, 22') durch Arme einer U-förmigen Halterung (20) ausgebildet sind, die mit der Trägerstruktur (1) verbunden oder verbindbar ist.

7. Waschmaschine (100) nach einem der vorstehenden Ansprüche, wobei die Dämpferfixierungsanordnung (2) eine Blockiervorrichtung (51, 52) umfasst, um die Drehung des Stifts (21) in eine Löserichtung zu verhindern.

8. Waschmaschine (100) nach Anspruch 7, wobei die Blockiervorrichtung einen ersten und zweiten Vorsprung (51, 52) auf dem Stift (21) bzw. auf einer Schulter (22) des Paars Schultern (22, 22') umfasst, wobei der erste und zweite Vorsprung (51, 52) ineinander eingreifen, wenn der Stift (21) vollständig auf die Halterung (22) geschraubt ist.

9. Waschmaschine (100) nach Anspruch 8, wobei der erste und/oder zweite Vorsprung (51, 52) eine schräge Fläche (510, 520) umfasst, die einer entsprechenden Fläche des anderen Vorsprungs zugewandt ist und eine Vorderkante (511) und eine Hinterkante (512) des Vorsprungs definiert, wobei die Vorderkante (511) von dem anderen Vorsprung weiter beabstandet ist als die Hinterkante (512).

10. Waschmaschine (100) nach Anspruch 8 oder 9, wobei der Stift (21) einen Betriebskopf (213) umfasst, in dem eine Anschlagfläche (214) definiert ist, wobei die Anschlagfläche (214) an einer Schulter (22) des Paars Schultern anschlägt, wenn der Stift (21) vollständig auf die Halterung (20) geschraubt ist, wobei der erste Vorsprung (51) in Radialrichtung vom Betriebskopf (213) vorsteht, wobei die Hinterkante (512) von der Anschlagfläche (214) zur Schulter (22) hin vorsteht.

11. Waschmaschine (100) nach Anspruch 10, wobei die Schulter (22) eine Manschette (224) umfasst, an die die Anschlagfläche (214) anschlägt, wobei der zweite Vorsprung (52) in Radialrichtung von der Manschette (224) vorsteht.

12. Waschmaschine (100) nach einem der Ansprüche 8 bis 11, wobei der erste und/oder zweite Vorsprung (51, 52) zumindest teilweise elastisch verformbar sind und wobei die schräge Fläche (510, 520) eines Vorsprungs (51) bei der Drehung des Stifts (21) in den anderen Vorsprung (52) eingreift, sodass die Vorsprünge (51, 52) beim Eingriff der schrägen Fläche (510, 520) in den anderen Vorsprung (52) auseinander gedrückt werden.

13. Waschmaschine (100) nach einem der vorstehenden Ansprüche, wobei die Gewindebohrungen (220, 220') und die entsprechenden Gewindeabschnitte (210, 210') eingängige Gewindeformen aufweisen.

## Revendications

1. Machine à laver (100) comprenant :
• une chambre de traitement (4) comprenant un tambour (40) destiné à recevoir une charge à laver ;
• une structure de support (1) de ladite chambre de traitement (4) ;
• au moins un élément amortisseur (3) assemblant ladite chambre de traitement (4) à ladite structure de support (1) ;
• un ensemble de fixation d'amortisseur (2) destiné à fixer avec faculté de rotation ledit au moins un élément amortisseur (3) sur ladite structure de support (1), ledit ensemble de fixation d'amortisseur (2) comprenant une paire d'épaulements (22, 22') et une broche (21) ;
dans laquelle ledit au moins un élément amortisseur (3) comprend une première extrémité d'assemblage (30) qui est/peut être accouplée avec faculté de rotation avec ladite broche (21) et qui est/peut être positionnée entre lesdits épaulements (22, 22'),
**caractérisée en ce que**
lesdits épaulements (22, 22') comprennent des trous filetés respectifs (220, 220') dans lesquels des parties filetées respectives (210, 210') de ladite broche (21) sont/peuvent être accouplées.

2. Machine à laver (100) selon la revendication 1, dans laquelle le diamètre (D) du trou fileté (220) d'un épaulement (22) et d'une première partie filetée respective (210) de ladite broche (21) est plus grand que le diamètre (d) du trou fileté (220') de l'autre épaulement (22') et d'une deuxième partie filetée respective (210') de ladite broche (21).

3. Machine à laver (100) selon la revendication 1 ou 2, dans laquelle ladite broche (21) comprend une pointe conique (211) s'étendant axialement depuis une desdites parties filetées (210, 210').

4. Machine à laver (100) selon l'une quelconque des revendications précédentes, dans laquelle ladite broche (21) comprend une partie cylindrique lisse (212) entre lesdites parties filetées respectives (210, 210').

5. Machine à laver (100) selon la revendication 4, dans laquelle un siège (31) est défini dans ladite première extrémité d'assemblage (30), ledit siège (31) étant couplé avec faculté de rotation avec ladite partie cylindrique lisse (212).

6. Machine à laver (100) selon l'une quelconque des revendications précédentes, dans laquelle lesdits épaulements (22, 22') sont formés par des bras d'un étrier en forme de U (20) assemblé ou assemblable à ladite structure de support (1).

7. Machine à laver (100) selon l'une quelconque des revendications précédentes, dans laquelle ledit ensemble de fixation d'amortisseur (2) comprend un dispositif de blocage (51, 52) destiné à empêcher une rotation de ladite broche (21) dans une direction de dévissage.

8. Machine à laver (100) selon la revendication 7, dans laquelle ledit dispositif de blocage comprend une première et une deuxième saillie (51, 52), respectivement sur ladite broche (21) et sur un épaulement (22) de ladite paire d'épaulements (22, 22'), lesdites première et deuxième saillies (51, 52) s'accouplant l'une avec l'autre quand ladite broche (21) est totalement vissée sur ledit étrier (22).

9. Machine à laver (100) selon la revendication 8, dans laquelle ladite première et/ou ladite deuxième saillie (51, 52) comprennent une surface inclinée (510, 520) faisant face à une surface respective de l'autre saillie et définissant un bord d'attaque (511) et un bord de fuite (512) de la saillie, ledit bord d'attaque (511) étant plus distant de l'autre saillie que ledit bord de fuite (512).

10. Machine à laver (100) selon la revendication 8 ou 9, dans laquelle ladite broche (21) comprend une tête d'actionnement (213) dans laquelle est définie une surface de butée (214), ladite surface de butée (214) butant sur un épaulement (22) de ladite paire d'épaulements quand ladite broche (21) est totalement vissée sur ledit étrier (20), ladite première saillie (51) faisant saillie dans une direction radiale depuis ladite tête d'actionnement (213), ledit bord de fuite (512) faisant saillie depuis ladite surface de butée (214) vers ledit épaulement (22).

11. Machine à laver (100) selon la revendication 10, dans laquelle ledit épaulement (22) comprend un collier (224) sur lequel bute ladite surface de butée (214), ladite deuxième saillie (52) faisant saillie dans une direction radiale depuis ledit collier (224).

12. Machine à laver (100) selon l'une quelconque des revendications 8 à 11, dans laquelle ladite première et/ou ladite deuxième saillie (51, 52) sont au moins partiellement déformables élastiquement et dans laquelle la surface inclinée (510, 520) d'une saillie (51) s'accouple avec l'autre saillie (52) pendant une rotation de ladite broche (21) de telle sorte que lesdites saillies (51, 52) sont écartées lors de l'accouplement de ladite surface inclinée (510, 520) avec l'autre saillie (52).

13. Machine à laver (100) selon l'une quelconque des revendications précédentes, dans laquelle lesdits trous filetés (220, 220') et lesdites parties filetées respectives (210, 210') ont des formes de filet à un seul départ.
